(19) Europäisches Patentamt
European Patent Office
Office européen des brevets

(11) EP 3 059 000 A1

## EUROPEAN PATENT APPLICATION
published in accordance with Art. 153(4) EPC

(43) Date of publication:
24.08.2016 Bulletin 2016/34

(21) Application number: 14854059.4

(22) Date of filing: 30.09.2014

(51) Int Cl.:
B01D 53/02 (2006.01)   B01D 53/04 (2006.01)
B01J 20/10 (2006.01)   B01J 20/12 (2006.01)
B01J 20/14 (2006.01)   B01J 20/16 (2006.01)
B01J 20/18 (2006.01)   B01J 20/28 (2006.01)
B01J 20/30 (2006.01)   C01B 33/14 (2006.01)
C01B 39/02 (2006.01)   H01L 21/027 (2006.01)

(86) International application number:
PCT/JP2014/075994

(87) International publication number:
WO 2015/056559 (23.04.2015 Gazette 2015/16)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.10.2013   JP 2013216025
17.10.2013   JP 2013216026
02.06.2014   JP 2014114338

(71) Applicant: Nitta Corporation
Osaka-shi, Osaka 556-0022 (JP)

(72) Inventors:
• SHIGETA, Makoto
Yamatokohriyama-shi
Nara 639-1085 (JP)
• OHSHIO, Minoru
Yamatokohriyama-shi
Nara 639-1085 (JP)

(74) Representative: Grünecker Patent- und
Rechtsanwälte
PartG mbB
Leopoldstraße 4
80802 München (DE)

(54) **CHEMICAL FILTER**

(57)     Provided is a chemical filter for silanol compound removal which is capable of efficiently removing a silanol compound in air.

The chemical filter for silanol compound removal of the present invention uses an inorganic silica-based porous material such that a pH of a mixed solution obtained by mixing with pure water (content: 5 wt%) is 7 or less as an adsorbent.

[Figure 1]

**Description**

Technical Field

The present invention relates to a chemical filter for removing a silanol compound from the air. Further, the present invention relates to an air cleaning method using the chemical filter, an exposure apparatus provided with the chemical filter, a coating and developing apparatus provided with the chemical filter, and a gaseous pollutant-controlled clean room provided with the chemical filter.

Background Art

A disilazane compound such as hexamethyldisilazane (HMDS) is known to be used as a photoresist adhesion agent in an exposure step of a semiconductor production process. Spraying HMDS onto a wafer surface, for example, as a gas causes substitution of hydroxyl groups on the wafer surface with trimethylsilanol groups and thereby makes the wafer surface hydrophobic, so as to improve the adhesion between the wafer surface and a resist agent. However, HMDS may sometimes be hydrolyzed into trimethylsilanol (TMS) that is a low molecular weight material, so as to be suspended in the form of a gas in the exposure apparatus. There is a possibility that the suspended TMS is decomposed by receiving energy of short wavelength light such as excimer laser used in the exposure apparatus or others, and the decomposed material is bonded to the surface of a lens or the like to cause lens fogging, resulting in exposure failure or the like.

Generally, air that has passed through a chemical filter having an adsorbent such as activated carbon is fed into the chamber of the exposure apparatus in which the exposure step is performed. It is common that gaseous impurities such as TMS are removed by the chemical filter, so that the inside of the chamber is kept clean to a certain degree, and exposure failure or the like is prevented (for example, see Patent Literature 1).

However, TMS is a volatile material with a low molecular weight, which is difficult to adsorb for activated carbon or the like that is a common adsorbent of chemical filters, and even if TMS is adsorbed, it is desorbed at once. Therefore, it is difficult to efficiently remove TMS. Accordingly, use of a large amount of activated carbon has been conventionally needed, for example, by increasing the thickness or increasing the capacity of the chemical filter, in order to remove a required amount of TMS.

Patent Literature 2 discloses a chemical filter using an acidic impregnating agent. In this chemical filter, a silanol compound contained in air is dimerized by the acidic impregnating agent to be adsorbed. However, in the case where the concentration of the silanol compound in air is exceptionally low, the dimerization reaction is less likely to occur, and therefore it cannot be said that this method necessarily yields sufficient removal efficiency.

Citation List

Patent Literature

Patent Literature 1: Japanese Patent Laid-Open No. 2008-181968
Patent Literature 2: International Publication No. WO 2011/099616

Summary of Invention

Technical Problem

Accordingly, it is an object of the present invention to provide a chemical filter for silanol compound removal which is capable of efficiently removing a silanol compound such as TMS.

It is another object of the present invention to provide an air cleaning method capable of efficiently removing a silanol compound such as TMS that is present in air.

It is still another object of the present invention to provide an exposure apparatus, a coating and developing apparatus, and a gaseous pollutant-controlled clean room, which are provided with the above-described chemical filter.

Solution to Problem

As a result of diligent studies in order to achieve the above-described objects, the present inventors have found that a silanol compound such as TMS in air can be exceptionally efficiently removed by using, as an adsorbent, an inorganic silica-based porous material such that a pH of a water mixture thereof with pure water is 7 or less, and have accomplished the present invention.

That is, the present invention provides a first chemical filter for silanol compound removal using, as an adsorbent, an inorganic silica-based porous material such that a pH of a water mixture (content: 5 wt%) obtained by mixing with pure water is 7 or less.

In the chemical filter for silanol compound removal, the inorganic silica-based porous material may be at least one or two or more inorganic silica-based porous materials selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

The chemical filter for silanol compound removal may use, as the adsorbent, another adsorbent together with the inorganic silica-based porous material such that a pH of the water mixture (content: 5 wt%) is 7 or less.

The chemical filter for silanol compound removal may comprise synthetic zeolite as the inorganic silica-based porous material, wherein a content of the synthetic zeolite in the adsorbent is 10 weight% or more based on a total weight of the adsorbent.

The chemical filter for silanol compound removal may comprise synthetic zeolite as the inorganic silica-based porous material, wherein a ratio (molar ratio) of $SiO_2$ to $Al_2O_3$ [$SiO_2/Al_2O_3$] in the synthetic zeolite is 4 to 2000.

The chemical filter for silanol compound removal may comprise synthetic zeolite as the inorganic silica-based porous material, wherein the synthetic zeolite has at least one framework structure selected from the group consisting of A type, ferrierite, MCM-22, ZSM-5, ZSM-11, SAPO-11, mordenite, beta type, X type, Y type, L type, chabazite, and offretite.

The chemical filter for silanol compound removal may be a chemical filter in which the adsorbent is attached to a filter substrate by a binder.

In the chemical filter for silanol compound removal, the binder may be a binder such that a pH of a water mixture (content: 5 wt%) obtained by mixing with pure water is 7 or less.

In the chemical filter for silanol compound removal, the binder may be an inorganic binder.

In the chemical filter for silanol compound removal, the inorganic binder may be colloidal inorganic oxide particles.

In the chemical filter for silanol compound removal, the chemical filter may have a honeycomb structure, a pleated structure, or a three-dimensional network structure.

In the chemical filter for silanol compound removal, the honeycomb structure may be a honeycombed structure or a shape with a cross section in the form of grids, circles, waves, polygons, or irregular forms, or a shape having a curved surface entirely or partially, the structure allowing air to pass through cells serving as elements of the structure.

The chemical filter for silanol compound removal may be a chemical filter comprising the adsorbent that is pelletized.

In the chemical filter for silanol compound removal, the pelletization may use a binder such that a pH of a water mixture (content: 5 wt%) obtained by mixing with pure water is 7 or less.

In the chemical filter for silanol compound removal, the filter containing the pelletized adsorbent may have at least one structure selected from the group consisting of a pleated structure, a pellet-filled structure, and a three-dimensional network structure.

The chemical filter for silanol compound removal may be a chemical filter produced by a papermaking process.

The chemical filter for silanol compound removal may be a ceramic chemical filter.

The chemical filter for silanol compound removal may be a chemical filter in which the adsorbent is attached to a filter substrate without using a binder.

Further, the present invention provides a second chemical filter for silanol compound removal, using, as an adsorbent, an inorganic silica-based porous material, such that a pH of a water mixture (content: 5 wt%) obtained by mixing a mixture containing the adsorbent separated from the chemical filter with pure water is 7 or less.

In the chemical filter for silanol compound removal, the inorganic silica-based porous material may be at least one inorganic silica-based porous material selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

Further, the present invention provides a third chemical filter for silanol compound removal, using, as an adsorbent, an inorganic silica-based porous material as an adsorbent, such that a pH of an immersion fluid (content of the chemical filter: 5 wt%) obtained by immersing a strip of the chemical filter containing the adsorbent in pure water is 7 or less.

In the chemical filter for silanol compound removal, the inorganic silica-based porous material may be at least one inorganic silica-based porous material selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

The present invention further provides an exposure apparatus comprising the above-described chemical filter for silanol compound removal.

The present invention further provides a coating and developing apparatus comprising the above-described chemical filter for silanol compound removal.

The present invention further provides a gaseous pollutant-controlled clean room comprising the above-described chemical filter for silanol compound removal.

Advantageous Effects of Invention

According to the chemical filter of the present invention, a removal effect, particularly, of a silanol compound such as TMS lasts for a long time as compared with activated carbon since TMS or the like that has been adsorbed once is not desorbed again. That is, the removal efficiency gently decreases without decreasing in a short time, and does not turn into a minus effect (phenomenon in which the concentration is higher on the downstream side of the filter than on the upstream side thereof) by releasing TMS as in activated carbon.

Moreover, according to the chemical filter of the present invention, since a silanol compound in air can be removed exceptionally efficiently, the amount of the adsorbent to be used can be reduced to a very small amount, and the number of filter substrates also can be reduced, resulting in energy saving, low cost, and space saving.

Brief Description of Drawings

[Figure 1] Figure 1 is a schematic view of a gas permeability tester used in Example 1.

[Figure 2] Figure 2 is a schematic sectional view of a part of the gas permeability tester used in Example 1.

[Figure 3] Figure 3 is a graph (relationship between the pH of a water mixture of zeolite and the removal efficiency) showing the results of the gas permeability test of Example 1.

[Figure 4] Figure 4 is a graph (relationship between the pH of a water mixture of silica gel, acid clay, activated clay, diatomite, fumed silica, and talc and the removal efficiency) showing the results of the gas permeability test of Example 1.

[Figure 5] Figure 5 is a graph (relationship (temporal change) between the pH of a water mixture of zeolite and the removal efficiency) showing the results of the gas permeability test of Example 2.

[Figure 6] Figure 6 is a graph (relationship (temporal change) between the pH of a water mixture of silica gel, acid clay, activated clay, and diatomite and the removal efficiency) showing the results of the gas permeability test of Example 2.

[Figure 7] Figure 7 is a schematic view of a gas permeability tester used in Example 4.

[Figure 8] Figure 8 is a graph (temporal change in removal efficiency of TMS) showing the results of the gas permeability test of Example 4.

[Figure 9] Figure 9 is a graph (relationship (temporal change) between the pH of a water mixture of a binder and the removal efficiency) showing the results of the gas permeability test of Example 5.

[Figure 10] Figure 10 is a graph (relationship (temporal change) between the content of synthetic zeolite and the removal efficiency) showing the results of the gas permeability test of Example 6.

Description of Embodiments

[Chemical filter]

A first chemical filter for silanol compound removal of the present invention is a chemical filter for silanol compound removal, using, as an adsorbent, an inorganic silica-based porous material such that a pH of a water mixture (content: 5 wt%) obtained by mixing with pure water is 7 or less.

A second chemical filter for silanol compound removal of the present invention is a chemical filter for silanol compound removal using, as an adsorbent, an inorganic silica-based porous material, such that a pH of a water mixture (content: 5 wt%) obtained by mixing a mixture containing the adsorbent separated from the chemical filter with pure water is 7 or less. The above-described water mixture can be obtained, for example, by adding pure water to 5 g of the above-described mixture of the adsorbent to give 100 g of total water mixture, so that the content of the above-described mixture of the adsorbent is 5 wt% based on the total water mixture, followed by sufficient stirring.

A third chemical filter for silanol compound removal of the present invention is a chemical filter for silanol compound removal using, as an adsorbent, an inorganic silica-based porous material, such that a pH of an immersion fluid (content of the chemical filter: 5 wt%) obtained by immersing a strip of the chemical filter containing the adsorbent in pure water is 7 or less. The above-described immersion fluid can be obtained, for example, by adding pure water to 5 g of the strip of the chemical filter containing the adsorbent to give 100 g of total immersion fluid, so that the content of the above-described strip of the chemical filter containing the adsorbent is 5 wt% based on the total immersion fluid, followed by sufficient stirring.

In this description, the "first chemical filter for silanol compound removal of the present invention", the "second chemical filter for silanol compound removal of the present invention", and the "third chemical filter for silanol compound removal of the present invention" may be collectively referred to as the "chemical filter of the present invention". Further, in this description, the adsorbent using the inorganic silica-based porous material such that a pH of a water mixture (content: 5 wt%) obtained by mixing with pure water is 7 or less may be referred to as the "adsorbent of the present invention". Further, in this description, the "pH of a water mixture" means the "pH of a water mixture (content: 5 wt%)", unless otherwise specified. Further, in this description, the "pH of an immersion fluid" means the "pH of an immersion fluid (content of the chemical filter: 5 wt%)", unless otherwise specified.

(Adsorbent of the present invention)

The chemical filter of the present invention uses an inorganic silica-based porous material as an essential adsorbent. Only one of the above-described inorganic silica-based porous material may be used, or two or more thereof may be used.

In the first chemical filter for silanol compound removal of the present invention, a pH of a water mixture (content: 5 wt%) of the above-described inorganic silica-based porous material obtained by mixing with pure water is 7 or less (for example, 3 to 7), preferably less than 7 (for example, not less than 3 and less than 7), more preferably 3 to 6.5, further preferably 4 to 6. The above-described pH of 7 or less enables removal of a silanol compound with high efficiency.

In this description, the pH of the water mixture (content: 5 wt%) obtained by mixing with pure water means a pH measured on the condition that the content of the material (target material) mixed in the water mixture is 5 wt% based on the total water mixture. For example, the pH of the water mixture (content: 5 wt%) of the inorganic silica-based porous material obtained by mixing with pure water is a pH measured on the condition that the content of the inorganic silica-based porous material is 5 wt%. The above-described pH of the water mixture can be measured, for example, using a pH meter. It should be noted that, in the case of using the above-described inorganic silica-based porous material impregnated with an impregnating agent or the like as the adsorbent of the present invention, the above-described "pH of a water mixture (content: 5 wt%) obtained by mixing with pure water" means the pH of a water mixture (content: 5 wt%) of the inorganic silica-based porous material obtained by mixing with pure water before the impregnation with the impregnating agent or the like (that is, the inorganic silica-based porous material that is not impregnated with the impregnating agent or the like).

In this description, the water mixture (content: 5 wt%) can be produced, for example, by the following "method for producing a water mixture (content: 5 wt%)".

Method for producing a water mixture (content: 5 wt%)

The above-described water mixture (content: 5 wt%) can be produced, for example, by mixing a sample for which the pH of the water mixture is measured (which may be referred to as "target sample") with pure water, so that the content is 5 wt%, followed by sufficient stirring, and then allowing it to stand still. Although pure water is used for producing the above-described water mixture, a mixed solvent of an organic solvent with pure water also may be used. However, in the case of using the organic solvent, the acid dissociation constant significantly varies depending on the type and concentration of the organic solvent, and therefore a water-soluble organic solvent such as alcohol is generally used at a concentration within the range that does not significantly affect the pH. It should be noted that the above-described "wt%" has the same meaning as "weight%". Specifically, a water mixture with a content of 5 wt% can be produced, for example, by weighing 5 g of a target sample using a scale or the like, further adding pure water thereto to give a total of 100 g, and sufficiently stirring the liquid. For example, the water mixture of the inorganic silica-based porous material (content: 5 wt%) can be produced using the inorganic silica-based porous material as the above-described target sample.

The above-described inorganic silica-based porous material used for the chemical filter of the present invention is not specifically limited, but it may have a specific surface area (BET specific surface area) of 10 $m^2$/g or more (for example, 10 to 800 $m^2$/g), preferably 50 $m^2$/g or more (for example, 50 to 750 $m^2$/g), more preferably 100 $m^2$/g or more (for example, 100 to 700 $m^2$/g).

The above-described inorganic silica-based porous material is not specifically limited, but examples thereof include an inorganic silica-based porous material that may have a content of $SiO_2$ in the porous material of 5 weight% or more (for example, 5 to 100 weight%), preferably 10 weight% or more, more preferably 20 weight% or more, further preferably 50 weight% or more.

The above-described inorganic silica-based porous material is not specifically limited, but examples thereof include zeolite (such as synthetic zeolite and natural zeolite), silica gel, silica alumina, aluminum silicate, porous glass, diatomite, hydrous magnesium silicate clay mineral (such as talc), acid clay, activated clay, activated bentonite, mesoporous silica, aluminosilicate, and fumed silica. Use of the above-described inorganic silica-based porous material as the adsorbent enables removal of a silanol compound with high efficiency. Particularly, synthetic zeolite is preferable. When synthetic zeolite is used as the adsorbent, the silanol compound can be efficiently removed continuously over a longer period of time. Only one of the above-described inorganic silica-based porous material may be used, or two or more thereof may be used. It should be noted that the above-described synthetic zeolite includes artificial zeolite.

The above-described synthetic zeolite is not specifically limited, but examples thereof include synthetic zeolite having a framework structure such as A type, ferrierite, MCM-22, ZSM-5, ZSM-11, SAPO-11, mordenite, beta type, X type, Y type, L type, chabazite, and offretite. It should be noted that, as the above-described synthetic zeolite, zeolite having one of framework structure may be used, or two or more of zeolite may be used in combination.

Examples of the above-described artificial zeolite generally include zeolite produced from wastes containing silicon and aluminum such as coal ash discharged from coal-fired power plants and paper sludge incineration ash discharged from paper mills. Only one of the above-described artificial zeolite may be used, or two or more thereof may be used in combination.

The above-described natural zeolite is not specifically limited, but examples thereof include clinoptilolite, mordenite, boiling stone, natrolite, gonnardite, edingtonite, analcime, leucite, yugawaralite, gismondine, paulingite, phillipsite, chabazite, erionite, faujasite, ferrierite, mutinaite, tschernichite, heulandite, stilbite, cowlesite, aluminosilicate, beryllosilicate (such as roggianite and hsianghualite), and zincosilicate (gaultite). Only one of the above-described natural zeolite may be used, or two or more thereof may be used in combination.

As the above-described zeolite, an acid-treated product obtained by acid treatment of the above-described natural zeolite and protonic zeolite obtained by replacing cations in the above-described natural zeolite with hydrogen may be used. The above-described protonic zeolite can be produced, for example, using a method of performing ion exchange of cations such as sodium ions in the natural zeolite into ammonium ions, followed by calcination.

A pH of a water mixture (content: 5 wt%) of the above-described zeolite obtained by mixing with pure water is 7 or less (for example, 3 to 7), preferably less than 7 (for example, not less than 3 and less than 7), more preferably 3 to 6.8, further preferably 3.5 to 6.7, particularly preferably 4 to 6.5. It should be noted that the water mixture (content: 5 wt%) of zeolite can be produced by the above-described "method for producing a water mixture (content: 5 wt%)" using zeolite as the target sample.

The ratio (molar ratio) of $SiO_2$ to $Al_2O_3$ [$SiO_2/Al_2O_3$] in the above-described synthetic zeolite is not specifically limited, but may be 4 to 2000, preferably 10 to 1500, more preferably 15 to 1000, further preferably 100 to 500, in view of the removal efficiency of the silanol compound.

The above-described zeolite is not specifically limited, but may contain cations in the framework structure. The above-described cations are not specifically limited, but examples thereof include hydrogen ions; ammonium ions; alkali metal ions such as lithium ions, sodium ions, and potassium ions; alkaline earth metal ions such as magnesium ions, calcium ions, and barium ions; and transition metal ions such as zinc ions, tin ions, iron ions, platinum ions, palladium ions, titanium ions, silver ions, copper ions, and manganese ions. Only one of the above-described cations may be contained, or two or more thereof may be contained. The content of the above-described cations in the above-described zeolite is not specifically limited.

It should be noted that the specific surface area (BET specific surface area), the average particle size (average particle diameter), the average pore size (diameter), the total pore volume, and the like of the above-described zeolite are not specifically limited. Further, only one of the above-described zeolite may be used, or two or more thereof may be used.

The above-described acid clay is not specifically limited, and acid clay produced in various places can be used. Examples thereof include acid clay produced in Niigata and acid clay produced in Yamagata. Only one of the above-described acid clay may be used, or two or more thereof may be used.

The above-described activated clay is obtained by acid treatment of the above-described acid clay, and examples thereof include activated clay obtained by subjecting the above-described acid clay to acid treatment with a mineral acid such as sulfuric acid to an extent that the basic structure of montmorillonite is not entirely broken, thereby eluting metal oxides such as Mg oxide and Fe oxide, so that the specific surface area and the pore volume are increased. Only one of the above-described activated clay may be used, or two or more thereof may be used.

The above-described diatomite is not specifically limited, and diatomite produced in various places can be used. For example, any diatomite such as diatomite (diatomaceous shale) produced in Wakkanai, Hokkaido, diatomite produced in Tsuzureko, Akita, diatomite produced in Hiruzen, Okayama, diatomite produced in Kokonoe, Oita, and diatomite (diatomaceous mudstone) produced in Noto, Ishikawa may be used. Only one of the above-described diatomite may be used, or two or more thereof may be used.

A pH of a water mixture (content: 5 wt%) of the above-described inorganic silica-based porous material other than synthetic zeolite (another inorganic silica-based porous material) obtained by mixing with pure water is 7 or less (for example, 3 to 7), preferably less than 7 (for example, not less than 3 and less than 7), more preferably 3 to 6.5, further preferably 3.5 to 6.3, particularly preferably 4 to 6. It should be noted that the water mixture (content: 5 wt%) of the other inorganic silica-based porous material can be produced by the above-described "method for producing a water mixture (content: 5 wt%)" using the other inorganic silica-based porous material as the target sample.

The content of $SiO_2$ in the above-described inorganic silica-based porous material other than synthetic zeolite is not specifically limited, but may be 50 weight% or more (for example, 50 to 100 weight%), preferably 60 weight% or more, more preferably 70 weight% or more, based on the total weight (100 weight%) of the inorganic silica-based porous material.

The above-described inorganic silica-based porous material is not specifically limited, but is preferably not impregnated with an impregnating agent or the like. That is, the above-described inorganic silica-based porous material preferably excludes inorganic silica-based porous materials impregnated with impregnating agents or the like. Examples of the above-described impregnating agents include an impregnating agent of an acidic substance and an impregnating agent of a basic substance. Impregnation with an impregnating agent of an acidic substance may possibly change the framework of the above-described inorganic silica-based porous material.

The adsorbent of the present invention is not specifically limited, but may contain an adsorbent (another adsorbent) other than the above-described inorganic silica-based porous material such that a pH of the water mixture is 7 or less, as needed. That is, another adsorbent may be used together with the above-described inorganic silica-based porous material such that a pH of the water mixture is 7 or less, as the adsorbent of the present invention. Examples of the above-described another adsorbent include porous materials other than the above-described inorganic silica-based porous material such that a pH of the water mixture is 7 or less, other silica, clay mineral, activated carbon, alumina, and glass. The combined use of the above-described another adsorbent as the adsorbent allows a chemical filter to have effects of the another adsorbent in addition to the effects of the present invention to be obtained.

The content of the above-described inorganic silica-based porous material such that a pH of the water mixture is 7 or less in the adsorbent of the present invention (in the total adsorbent) is not specifically limited, but is preferably 30 weight% or more (for example, 30 to 100 weight%), more preferably 50 weight% or more, further preferably 70 weight% or more, based on the total weight (100 weight%) of the adsorbent, in view of the removal efficiency of the silanol compound.

The content of synthetic zeolite in the adsorbent of the present invention (in the total adsorbent) is not specifically limited, but is preferably 10 weight% or more (for example, 10 to 100 weight%), more preferably 50 weight% or more, further preferably 70 weight% or more, based on the total weight (100 weight%) of the adsorbent, in view of the removal efficiency of the silanol compound.

The chemical filter of the present invention is not specifically limited as long as it uses, as the adsorbent, the inorganic silica-based porous material such that a pH of the water mixture (content: 5 wt%) is 7 or less. Examples of the above-described chemical filter include a chemical filter in which the adsorbent of the present invention is attached (adheres) to a filter substrate. It should be noted that, in the case where the adsorbent of the present invention also has a function as a binder, it is also possible to attach the adsorbent to the filter substrate without using a binder, but the adsorbent of the present invention is preferably attached to the filter substrate using a binder. That is, the above-described chemical filter may be a chemical filter in which the adsorbent of the present invention is attached to the filter substrate without using a binder (or a chemical filter to which only the adsorbent of the present invention is attached), but is preferably a chemical filter in which the adsorbent of the present invention is attached to the filter substrate using a binder.

The adsorbent of the present invention is not specifically limited, but may be pelletized. That is, the adsorbent of the present invention may be a pelletized adsorbent. That is, the chemical filter of the present invention may contain the adsorbent of the present invention that is pelletized. The above-described pelletization can be achieved, for example, by granulating the powder of the adsorbent of the present invention using the above-described binder.

(Filter substrate)

The above-described filter substrate is not specifically limited, and filter substrates that are generally used as a filter substrate of a chemical filter can be used. Examples of the above-described filter substrates include a fibrous substrate composed of fibers such as organic fibers and inorganic fibers (woven fabrics or non-woven fabrics), a foam product composed of polyurethane foam or the like, and a filter substrate using a fire resistant metal oxide or a fire resistant inorganic substance. Above all, as the above-described filter substrate, the fibrous substrate is preferable, and a glass cloth (glass cloth) is particularly preferable.

Examples of the fibers of the above-described fibrous substrate include inorganic fibers such as silica alumina fibers, silica fibers, alumina fibers, mullite fibers, glass fibers, rock wool fibers, and carbon fibers; and organic fibers such as polyethylene fibers, polypropylene fibers, nylon fibers, polyester fibers (such as polyethylene terephthalate fibers), polyvinyl alcohol fibers, aramid fibers, pulp fibers, and rayon fibers. Above all the above-described examples, the inorganic fibers are preferable in that the inorganic fibers enhance the strength of the chemical filter and reduce pollution due to outgassing from the fibers. Only one of the above-described fibers may be used, or two or more thereof may be used in combination. Further, the shapes of the above-described inorganic fibers and the above-described organic fibers are not specifically limited.

(Binder)

The above-described binder can be used for facilitating the attachment of the adsorbent to the filter substrate or pelletizing the adsorbent. The above-described binder is not specifically limited, and known or conventional binders for filters (such as air filters and chemical filters) can be used. The above-described binder may be an organic binder or an inorganic binder. The above-described binder is not specifically limited, but is preferably an inorganic binder. Only one of the above-described binder may be used, or two or more thereof may be used.

The above-described binder may be acidic or basic, but is preferably acidic, in order to maintain the pH of the above-described inorganic silica-based porous material low. A pH of a water mixture (content: 5 wt%) of the acidic binder obtained by mixing with pure water is 7 or less (for example, 3 to 7), preferably less than 7 (for example, not less than 3 and less than 7), more preferably 3 to 6.8, further preferably 3.5 to 6.7, particularly preferably 4 to 6.5. It should be noted that the water mixture (content: 5 wt%) of the binder can be produced by the above-described "method for producing a water mixture (content: 5 wt%)" using the binder as the target sample. It should be noted that, in the case where the above-described binder is a binder containing a solvent such as colloidal silica, the above-described content is a content of solid in the above-described binder with respect to the above-described water mixture.

Examples of the above-described organic binder include polyethylene resins, polypropylene resins, acrylic resins such as methyl methacrylate, ABS resins, polyester resins such as PET, polyvinyl alcohol, cellulose such as carboxymethylcellulose, and gum arabic. Only one of the above-described organic binder may be used, or two or more thereof may be used.

The above-described inorganic binder is preferably particulate so as not to completely cover the surface of the above-described inorganic silica-based porous material, and examples thereof include particles of inorganic oxides such as silicate soda, silica sol, alumina sol, colloidal silica, colloidal alumina, colloidal tin oxide, and colloidal titanium oxide, and above all, colloidal inorganic oxides such as colloidal silica, colloidal alumina, colloidal tin oxide, and colloidal titanium oxide are preferable. Particularly, colloidal silica is preferable. Only one of the above-described inorganic binder may be used, or two or more thereof may be used.

The average particle size (primary particle size), the specific surface area (BET specific surface area), the average pore size (diameter), the total pore volume, and the like of the above-described inorganic binder are not specifically limited.

(Structure of chemical filter)

The structure of the chemical filter of the present invention is not specifically limited, and may be any one of a honeycomb structure, a pleated structure, a pellet-filled structure, and a three-dimensional network structure. Among these, the honeycomb structure, the pleated structure, and the three-dimensional network structure are preferable, and the honeycomb structure is particularly preferable, in order to reduce the pressure loss. In the case of using a pelletized adsorbent (pellets) as the adsorbent of the present invention, the pleated structure, the pellet-filled structure, and the three-dimensional network structure are preferable, although there is no specific limitation. Only one of the above-described structures may be employed, or two or more structures may be employed in combination.

The above-described honeycomb structure includes a shape with a cross section, for example, in the form of grids, circles, waves, polygons, or irregular shapes, or a shape having a curved surface entirely or partially, other than a so-called honeycombed structure, and includes every structure that allows air to pass through cells serving as elements of the structure.

Examples of the above-described honeycomb structure include a structure obtained by alternately laminating corrugated sheets formed by corrugating process and flat sheets (corrugated honeycomb structure), and a structure composed of pleated sheets and flat sheets and obtained by sequentially laminating the flat sheets and the pleated sheets rectangularly to the gas permeation direction.

The above-described pleated structure, for example, includes a structure having a bellows shape processed so that waves or V shapes are continuous, in order to enlarge the filtration area efficiently within a limited space.

Examples of the above-described pellet-filled structure include a structure in which a casing having a structure that allows a gas to pass through the inside thereof is filled with the above-described pelletized adsorbent. Further, in the case where the adsorbent powder has a particle diameter that is large enough to be held within the casing, a structure in which the casing is filled with the powder as it is without being pelletized can be employed, instead of the above-described pellet-filled structure.

Preferable examples of the above-described three-dimensional network structure include a structure having a filter substrate of a mesh structure produced by three-dimensionally processing the above-described foam product composed of polyurethane foam or the like, glass wool or rock wool fibers, or the fibers of the above-described fibrous substrate, and polytetrafluoroethylene that is acicularly fiberized.

(Method for producing chemical filter of present invention)

The method for producing the chemical filter of the present invention is not specifically limited, and a known or conventional method for producing a chemical filter having an adsorbent can be used. The chemical filter of the present invention is not specifically limited, but has at least a step (adsorbent attaching step) of attaching the adsorbent of the present invention to a filter substrate, for example. The method for producing the chemical filter of the present invention is not specifically limited, but may have a step (another step) other than the above-described adsorbent attaching step. Further, a commercially available filter substrate as purchased may be used as the above-described filter substrate.

In the above-described adsorbent attaching step, the adsorbent of the present invention can be attached, for example, by immersing the above-described filter substrate in a suspension containing the adsorbent of the present invention, water, and the above-described binder or an adhesive, as needed, and thereafter taking it out of the suspension, followed by drying. The above-described suspension may contain a precipitation inhibitor within the range in which the effects of the present invention are not impaired.

Other than above, the adsorbent of the present invention also can be attached by immersing the above-described filter substrate in a suspension containing the above-described binder resin and water, thereafter taking it out of the suspension, followed by drying, and thereafter dispersing and attaching the adsorbent of the present invention onto the surface of the filter substrate.

Other than above, the adsorbent of the present invention also can be attached by attaching pellets produced by granulating the powder of the adsorbent of the present invention to the above-described filter substrate using an adhesive or the like, or filling the inside of the filter substrate with the pellets. When the powder of the adsorbent of the present invention is granulated, the above-described binder may be mixed, as needed. The powder of the adsorbent of the present invention shows clay-like viscosity and plasticity when it is mixed with the above-described binder and an appropriate amount of water, which enables granulation.

Other than above, the adsorbent of the present invention also can be attached by using an acicularly fiberized polytetrafluoroethylene resin, and allowing the acicular fibers to capture the adsorbent of the present invention and carry it.

It should be noted that, in the chemical filter having the above-described pleated structure, the adsorbent of the present invention also can be attached, for example, by sandwiching the powder or pelletized form of the adsorbent of the present invention between two pieces of filter substrates made of non-woven fabrics using an adhesive or the like.

Examples of the above-described other step include a step (filter substrate processing step) of processing the filter substrate. It should be noted that the order of the above-described filter substrate processing step and the above-described adsorbent attaching step is not specifically limited, but the order of the filter substrate processing step and the adsorbent attaching step is preferable in view of the workability.

Examples of the above-described filter substrate processing step include a step of corrugating the filter substrate as described above, a step of forming the honeycomb structure, and a step of providing pores through the filter substrate. As the above-described filter substrate processing step, only one step may be performed, or the same or different two or more steps may be performed. Also in the case of performing two or more steps as the above-described filter substrate processing step, the order thereof is not specifically limited.

Other than above, the chemical filter of the present invention may be a chemical filter produced by a papermaking process. The above-described chemical filter produced by the papermaking process is, for example, a chemical filter having at least a fibrous substrate and the adsorbent of the present invention, and is obtained by forming flocs generated by adding a flocculant to a suspension containing the fibers constituting the above-described fibrous substrate and the adsorbent of the present invention into a sheet by a wet papermaking process, followed by heating.

Other than above, the chemical filter of the present invention may be a ceramic chemical filter. The above-described ceramic chemical filter can be produced by a known or conventional method for processing ceramic materials. For example, the ceramic chemical filter can be produced by forming and calcining the adsorbent of the present invention together with ceramic raw materials. Specifically, the adsorbent of the present invention, the above-described binder, a pore-forming material, and other ceramic raw material, as needed, are weighed and kneaded to produce clay, and thereafter the clay is extruded using an extruder such as a screw extruder to produce a formed product, for example. The obtained formed product is dried and calcined, so that a porous ceramic chemical filter is obtained. The above-described ceramic chemical filter is not specifically limited, but a ceramic chemical filter having a honeycomb structure is preferable. The end face of the above-described ceramic chemical filter also can be appropriately processed to a specific length, using a grinding tool such as a diamond cutter and a diamond saw.

Above all the above description, the chemical filter of the present invention is particularly preferably a chemical filter having a honeycomb structure in which a plurality of corrugated sheets having surfaces to which the adsorbent of the present invention is attached using an inorganic binder are laminated via thin plate sheets.

The first chemical filter of the present invention uses, as the adsorbent, an inorganic silica-based porous material such that a pH of the water mixture is 7 or less. Therefore, it is inferred that the first chemical filter of the present invention acts as a solid acid due to the presence of the surface of the inorganic silica-based porous material such that a pH of the water mixture is 7 or less in the chemical filter so as to adsorb the silanol compound firmly by dehydration condensation of the silanol compound, and therefore can effectively remove the silanol compound. It should be noted that, even in the case of using another adsorbent in combination as the adsorbent, the surface of the inorganic silica-based porous material such that a pH of the water mixture is 7 or less is present in the chemical filter, and therefore the effect of effectively removing the silanol compound can be maintained.

In the second chemical filter for silanol compound removal of the present invention, a pH of a water mixture (content: 5 wt%) obtained by mixing a mixture containing the adsorbent separated from the chemical filter with pure water is 7 or less (for example, 3 to 7), preferably less than 7 (for example, not less than 3 and less than 7), more preferably 3 to 6.5, further preferably 4 to 6. The above-described pH of 7 or less enables removal of the silanol compound with high efficiency. It should be noted that the above-described adsorbent contains the above-described inorganic silica-based porous material.

In the second chemical filter for silanol compound removal of the present invention, the above-described water mixture (content: 5 wt%) can be produced, for example, by a method described above in the "method for producing a water mixture (content: 5 wt%)". Specifically, the water mixture can be produced using the mixture containing the adsorbent as the target sample.

In the second chemical filter for silanol compound removal of the present invention, the above-described separation can be achieved, for example, by immersing the chemical filter using the inorganic silica-based porous material as the adsorbent in an organic solvent such as methanol and acetone or water and shaking the above-described chemical filter in the organic solvent or water. Other than above, the separation may be performed by shaking the above-described chemical filter in air.

In the third chemical filter for silanol compound removal of the present invention, a pH of an immersion fluid (content of the chemical filter: 5 wt%) obtained by immersing a strip of the chemical filter containing the adsorbent in pure water is 7 or less (for example, 3 to 7), preferably less than 7 (for example, not less than 3 and less than 7), more preferably 3 to 6.5, further preferably 4 to 6. The above-described pH of 7 or less enables removal of the silanol compound with high efficiency. It should be noted that the above-described adsorbent contains the above-described inorganic silica-based porous material.

The above-described pH of the immersion fluid (content of the chemical filter: 5 wt%) obtained by immersing a strip of the chemical filter containing the adsorbent in pure water means a pH measured on the condition that the content of the chemical filter containing the adsorbent mixed in the immersion fluid is 5 wt% based on the total weight of the immersion fluid. The pH of the above-described immersion fluid can be measured, for example, using a pH meter.

The above-described immersion fluid (content of the chemical filter: 5 wt%) can be produced, for example, by mixing a strip of the chemical filter containing the adsorbent with pure water so that the content of the chemical filter is 5 wt%, followed by sufficient stirring, and then allowing it to stand still. It should be noted that the above-described "wt%" has the same meaning as "weight%". The immersion fluid having a content of the chemical filter of 5 wt% can be produced, for example, by making the strip of the chemical filter containing the adsorbent into powder by grinding or the like, weighing 5 g using a scale or the like, further adding pure water thereto to give a total weight of the immersion fluid of 100 g, and sufficiently stirring the immersion fluid.

In the third chemical filter for silanol compound removal of the present invention, the above-described inorganic silica-based porous material is not specifically limited, but a pH of a water mixture (content: 5 wt%) obtained by mixing it with pure water preferably is 7 or less (for example, 3 to 7), more preferably less than 7 (for example, not less than 3 and less than 7), further preferably 3 to 6.5, particularly preferably 4 to 6. It should be noted that the above-described adsorbent is not specifically limited, but another adsorbent is preferably used together with the above-described inorganic silica-based porous material such that a pH of the water mixture (content: 5 wt%) is 7 or less.

The second chemical filter for silanol compound removal of the present invention and the third chemical filter for silanol compound removal of the present invention can be produced, for example, by using the above-described inorganic silica-based porous material such that a pH of the water mixture is 7 or less that is used for the first chemical filter for silanol compound removal of the present invention, as the adsorbent.

Although not specifically limited, the chemical filter of the present invention is preferably free from an adsorbent impregnated with an impregnating agent of an acidic substance. That is, it is preferable that the chemical filter of the present invention excludes a chemical filter containing an adsorbent impregnated with an impregnating agent of an acidic substance.

[Air cleaning method]

The air cleaning method of the present invention removes the silanol compound in air using the chemical filter of the present invention. Therefore, the chemical filter of the present invention can be installed at an appropriate place for removing the silanol compound in air. For example, the chemical filter of the present invention can be used particularly preferably for applications in which the silanol compound is desired to be removed such as a chemical filter of a clean room (particularly as an internal chemical filter of an exposure apparatus and an internal chemical filter of a coating and developing apparatus), a chemical filter of a wastewater treatment plant, and a chemical filter of a landfill site.

In the above-described clean room (for example, in a gaseous pollutant-controlled clean room, particularly, in a clean room of a semiconductor production factory), various gaseous organic compounds such as a silanol compound are present. The silanol compound may sometimes adsorb on the surface of a silicon wafer or a liquid crystal glass substrate of a semiconductor to cause malfunction of such a product. Further, in the above-described wastewater treatment plant, a digestion gas generated from a digestion tank contains a slight amount of silanol compound derived from silicone oil contained in shampoos or cosmetics. Further, in the above-described landfill site, a siloxane compound or a silanol compound contained in biogases in the mud (such as activated sludge) used for landfilling may sometimes have caused a problem. Accordingly, the chemical filter of the present invention can be used particularly preferably for air cleaning in such applications.

Above all, the above-described chemical filter of a clean room is preferably an internal chemical filter of an exposure apparatus used in an exposure step of a semiconductor production process or an internal chemical filter of a coating and developing apparatus. Within the exposure apparatus used in the exposure step of the semiconductor production process, the coating and developing apparatus (coater developer), or the like, TMS may sometimes occur, where suspended TMS is decomposed, and the decomposed TMS is bonded to a lens or the like to cause fogging, which may possibly cause exposure failure or the like. Further, use of the chemical filter of the present invention inside the above-described exposure apparatus or the coating and developing apparatus allows them to serve as the exposure apparatus of the present invention or the coating and developing apparatus of the present invention.

Examples of the method for using the chemical filter of the present invention include not only a gas permeation method of removing a target material to be removed by forcibly introducing air containing the target material to be removed into an apparatus provided with the chemical filter using a power such as a ventilation fan, but also a standing method of removing the target material to be removed only by contact due to natural diffusion or natural convection without introducing air into the apparatus provided with the chemical filter using the power. That is, the chemical filter of the present invention can be used in both of the gas permeation method and the standing method.

[Exposure apparatus, and coating and developing apparatus]

The exposure apparatus of the present invention is provided with the chemical filter of the present invention. The above-described exposure apparatus is not specifically limited as long as the exposure apparatus has the chemical filter of the present invention. Further, the coating and developing apparatus of the present invention is provided with the chemical filter of the present invention. The above-described coating and developing apparatus is not specifically limited as long as the coating and developing apparatus has the chemical filter of the present invention. According to the exposure apparatus of the present invention and the coating and developing apparatus of the present invention, the chemical filter of the present invention using, as an adsorbent, an inorganic silica-based porous material such that a pH of the water mixture is 7 or less is used as an internal chemical filter, and therefore the silanol compound such as TMS in air can be efficiently removed, as compared with an exposure apparatus and a coating and developing apparatus using a conventional chemical filter using activated carbon as an adsorbent. In particular, the removal efficiency of the silanol compound does not decrease in a short time and does not turn into a minus efficiency (in which the concentration is higher on the downstream side of the filter than on the upstream side thereof) by releasing TMS as in activated carbon. Further, the silanol compound can be adsorbed without dimerization, and therefore the silanol compound in air even with low concentration can be efficiently removed. Therefore, exposure failure or the like due to the silanol compound in air can be significantly reduced.

Examples

Hereinafter, the present invention will be more specifically described by way of examples. However, the present invention is not limited to these examples at all. It should be noted that "ppb" is on a weight basis, unless otherwise specified.

Example 1

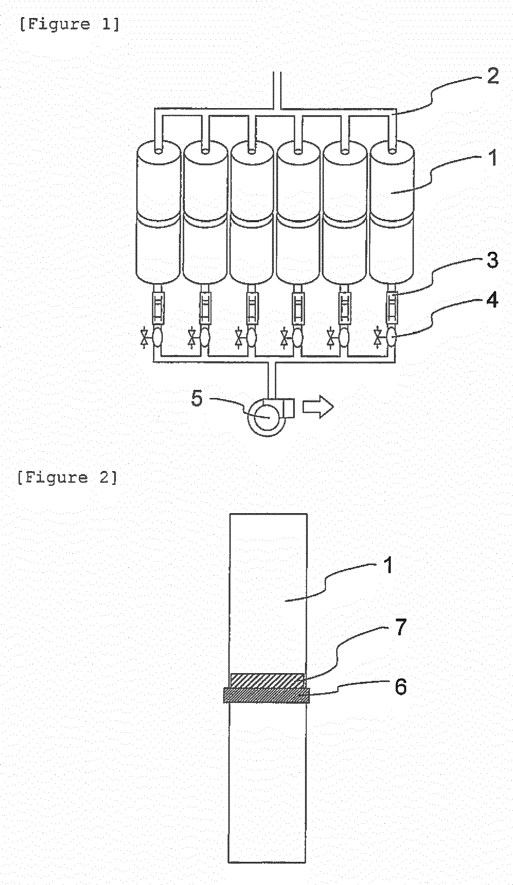

Using a gas permeability tester as shown in Figure 1, a gas removal efficiency of an adsorbent was measured.

That is, 6 series of two acrylic cylindrical test columns (with an inner diameter of 50 mm and a length of 30 cm) 1 serially connected were arranged in parallel, a gas supply tube 2 was attached to the upstream side of the columns, and flow meters 3, flow rate adjusting valves 4, and a pump 5 were attached in this order to the downstream side of the columns. A non-woven fabric 6 was sandwiched between the serially connected two columns, a test sample (adsorbent) 7 was spread on the non-woven fabric 6 to a thickness of 5 mm, and air was flowed with the flow rate being adjusted so that the filtration wind speed of the test sample was 5 cm/s. As the air flowed through the columns, 3 ppb of TMS and 250 ppb of VOC mixed with air adjusted to a temperature of 23°C and a humidity of 50% using a constant temperature and humidity chamber was used. A schematic sectional view (one series) of the above-described gas permeability tester is shown in Figure 2.

As the test sample (adsorbent), a plurality of zeolites (synthetic zeolites) (average particle size: 3 to 20 $\mu$m), which are shown in Table 1, such that the water mixtures (content: 5 wt%) have different pHs, and a plurality of silica gels, acid clays, activated clays, diatomites, fumed silica, and talc (average particle size: 5 to 30 $\mu$m), which are shown in Table 2, such that the water mixtures (content: 5 wt%) have different pHs were used. It should be noted that fumed silica processed into pellets was used. Measurement of the removal efficiency was performed for every 6 test samples, and the 6 test samples subjected to the measurement were used respectively for the columns 1 of the 6 series arranged in parallel.

After 3 days from the start of the gas permeation test, air on the upstream side and the downstream side of the columns was collected using adsorption tubes, and the adsorption tubes that collected the air were subjected to gas analysis using an ATD (thermal desorber)-GC/MS to measure the gas concentration of TMS. The removal efficiency of TMS was calculated by the following formula from the gas concentration of TMS on the upstream side and the downstream side of the measured columns to plot a graph of the relationship between the pH of the water mixtures of the test samples and the removal efficiency.

```
Removal efficiency (%) = {(Gas concentration on upstream
side - Gas concentration on downstream side)/Gas
concentration on upstream side} × 100
```

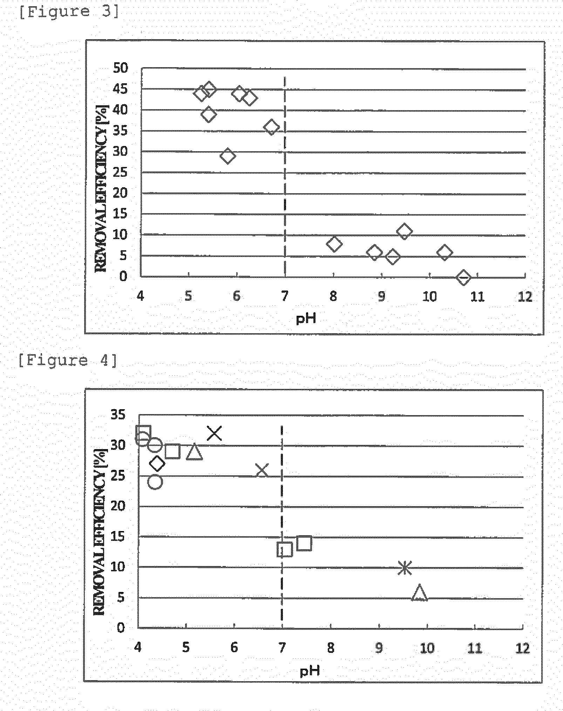

The results are shown in Figure 3 (zeolites) and Figure 4 (silica gels, acid clays, activated clays, diatomites, fumed silica, and talc). In Figure 4, squares (□) represent data of the silica gels, triangles (△) represent data of the acid clays, circles (○) represent data of the activated clays, crosses (×) represent data of the diatomites, diamonds (◊) represent data of the fumed silica, and asterisks (*) represent data of the talc, respectively. The horizontal axis of the graph represents the pH of the water mixtures of the test samples, and the vertical axis represents the removal efficiency (%) thereof.

[Table 1]

(Table 1)

| Test sample | Zeolite A | Zeolite B | Zeolite C | Zeolite D | Zeolite E | Zeolite F | Zeolite G | Zeolite H | Zeolite I | Zeolite J | Zeolite K | Zeolite L | Zeolite M |
|---|---|---|---|---|---|---|---|---|---|---|---|---|---|
| pH of water mixture | 5.25 | 5.4 | 5.8 | 6.04 | 8.02 | 8.85 | 9.23 | 10.31 | 10.71 | 5.41 | 6.25 | 9.47 | 6.71 |
| Framework structure | Mordenite | Y type | ZSM-5 | Beta type | Y type | Ferrierite | Y type | L type | X type | Y type | Y type | Beta type | Beta type |
| Specific surface area ($m^2$) | 450 | 620 | 300 | 450 | 700 | 170 | 550 | 290 | - | 650 | 550 | 500 | 500 |
| [$SiO_2/AlO_3$] | 240 | 400 | 1500 | 40 | 5.5 | 18 | 5.5 | 6.1 | - | 10 | 14 | 40 | - |
| Removal efficiency (%) | 44 | 39 | 29 | 44 | 8 | 6 | 5 | 6 | 0 | 45 | 43 | 11 | 36 |

[Table 2]

(Table 2)

| Test sample | Silica gel A | Silica gel B | Silica gel C | Silica gel D | Acid clay A | Acid clay B | Activated clay A | Activated clay B | Activated clay C | Activated clay 0 | Diatomite A | Diatomite B | Fumed silica | Talc |
|---|---|---|---|---|---|---|---|---|---|---|---|---|---|---|
| pH of water mixture | 4.09 | 4.7 | 7.04 | 7.44 | 5.16 | 9.84 | 3.96 | 4.08 | 4.33 | 4.34 | 5.57 | 6.56 | 4.38 | 9.53 |
| Specific surface area (m²) | 280 | 700 | 280 | 350 | 110 | 80 | 290 | 250 | 290 | 50 | 140 | 80 | - | - |
| Pore size (Å) | 260 | 25 | 260 | 140 | 109 | 125 | 63 | 64 | - | 160 | 70 | 60 | - | - |
| Removal efficiency (%) | 32 | 29 | 13 | 14 | 29 | 6 | 26 | 31 | 30 | 24 | 32 | 26 | 38 | 10 |

As shown in Figure 3, the zeolites such that a pH of the water mixtures was 7 or less showed significantly great removal efficiency of TMS, as compared with the zeolites such that a pH of the water mixtures was more than 7. Further, the lower the pH of the water mixtures of the zeolites, the higher the removal efficiency of TMS tended to be. As shown in Figure 4, the lower the pH of the inorganic silica-based porous material, the higher the removal efficiency of TMS tended to be.

Example 2

The gas removal efficiency of the adsorbent was measured using the gas permeability tester as shown in Figure 1 in the same manner as in Example 1, except that 7 ppb of TMS and 200 ppb of VOC mixed with air adjusted to a temperature of 23°C and a humidity of 50% using a constant temperature and humidity chamber was used as the air flowed through the columns, and the air was flowed with the flow rate being adjusted so that the filtration wind speed of the test sample was 3 cm/s.

As the test sample (adsorbent), specific zeolites, silica gels, acid clays, activated clay, and diatomite out of those shown in Table 1 and Table 2 were each used.

The air on the upstream side and the downstream side of the columns was collected using adsorption tubes, and the adsorption tubes that collected the air were subjected to gas analysis using an ATD (thermal desorber)-GC/MS to measure the gas concentration of TMS. The removal efficiency of TMS was calculated by the following formula from the gas concentration of TMS on the upstream side and the downstream side of the measured columns to plot a graph of the temporal change of the test samples.

```
Removal efficiency (%) = {(Gas concentration on upstream
side - Gas concentration on downstream side)/Gas
concentration on upstream side} × 100
```

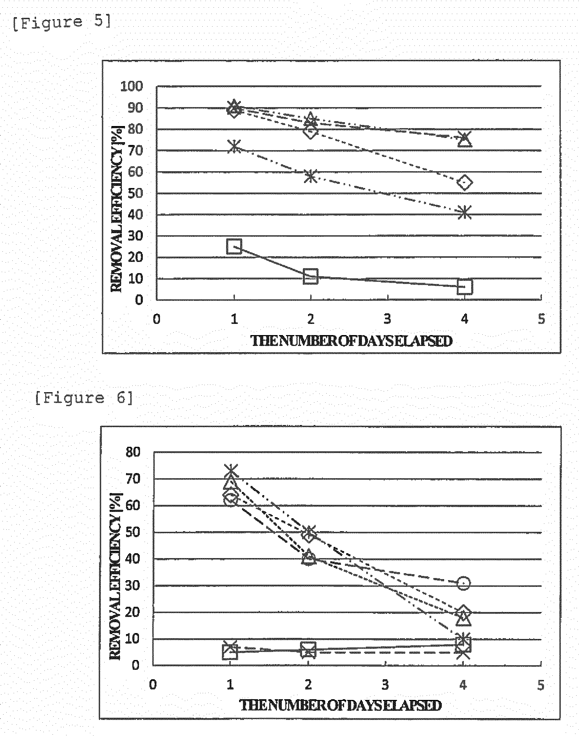

The results are shown in Figure 5 (zeolites) and Figure 6 (silica gels, acid clays, activated clay, and diatomite). In Figure 5, crosses (×) represent data of zeolite A, diamonds (◊) represent data of zeolite B, asterisks (*) represent data of zeolite C, triangles (△) represent data of zeolite D, and squares (□) represent data of zeolite G, respectively. In Figure 6, diamonds (◊) represent data of silica gel A, squares (□) represent data of silica gel C, triangles (△) represent data of acid clay A, crosses (×) represent data of acid clay B, asterisks (*) represent data of activated clay B, and circles (○) represent data of diatomite A, respectively. Further, in Figure 5 and Figure 6, the horizontal axis of the graph represents the number of days elapsed (days), and the vertical axis thereof represents the removal efficiency (%).

As shown in Figure 5, the zeolites (zeolite A, zeolite B, zeolite C, and zeolite D) such that a pH of the water mixtures was 7 or less showed significantly great removal efficiency of TMS even after a lapse of days, as compared with the zeolite (zeolite G) such that a pH of the water mixture was more than 7. Further, as shown in Figure 6, the silica gel (silica gel A), the acid clay (acid clay A), the activated clay (activated clay B), and the diatomite (diatomite A) such that a pH of the water mixtures was 7 or less showed significant removal efficiency of TMS even after a lapse of days, as compared with the silica gel (silica gel C) and the acid clay (acid clay B) such that a pH of the water mixtures was more than 7.

Example 3

The zeolite A after the completion of the gas permeation test of Example 2 was put into 30 ml of an acetone solvent, followed by shaking for 2 hours. Thereafter, its supernatant solution was subjected to GC-FID analysis. The area value measured by GC-FID of TMS is shown in Table 3. It should be noted that the gas permeation test was performed in the same manner as in Example 2 using, as a comparison target, coconut shell activated carbon (product name "TAIKO CB", manufactured by Futamura Chemical Co., Ltd.) as the adsorbent, and thereafter the area value measured in the same manner as the above-described measurement samples by GC-FID of TMS is shown in Table 3.

[Table 3]

(Table 3)

| | Coconut shell activated carbon | Zeolite A |
|---|---|---|

(continued)

|  | Coconut shell activated carbon | Zeolite A |
|---|---|---|
| TMS | 42033 | N.D. |
| * N.D.:not detected | | |

As shown in Table 3, in the case of the coconut shell activated carbon, the adsorbed TMS is desorbed by acetone extraction, whereas the adsorbed TMS is not desorbed by acetone extraction in the case of the zeolite A. It can be seen from this that TMS is adsorbed to the zeolites such that a pH of the water mixtures is 7 or less with an exceptionally strong force, as compared with the activated carbon.

Example 4

A filter structure A having a honeycomb structure was produced by laminating glass cloths (filter substrates) that had been formed into a corrugated shape via glass cloths in the form of sheets (fixed with an adhesive), immersing the laminate in a suspension containing the zeolite A, an inorganic binder (product name "SNOWTEX O", colloidal silica, manufactured by Nissan Chemical Industries, Ltd.), and water, and thereafter taking out of the suspension, followed by drying. The gas pores (gas passage) of the filter structure A had a corrugated cross section, in which the length of the bottom side of the corrugated shape was 1 to 5 mm, and the height thereof was 1 to 5 mm. The above-described filter structure A was ground and immersed in pure water to produce an immersion fluid (content of filter structure A: 5 wt%), and the pH of the immersion fluid as measured was 4.81. It should be noted that, as a comparison material, a filter structure B obtained by processing coconut shell activated carbon (product name "TAIKO CB", manufactured by Futamura Chemical Co., Ltd.) into a honeycomb structure in the same manner as above was used.

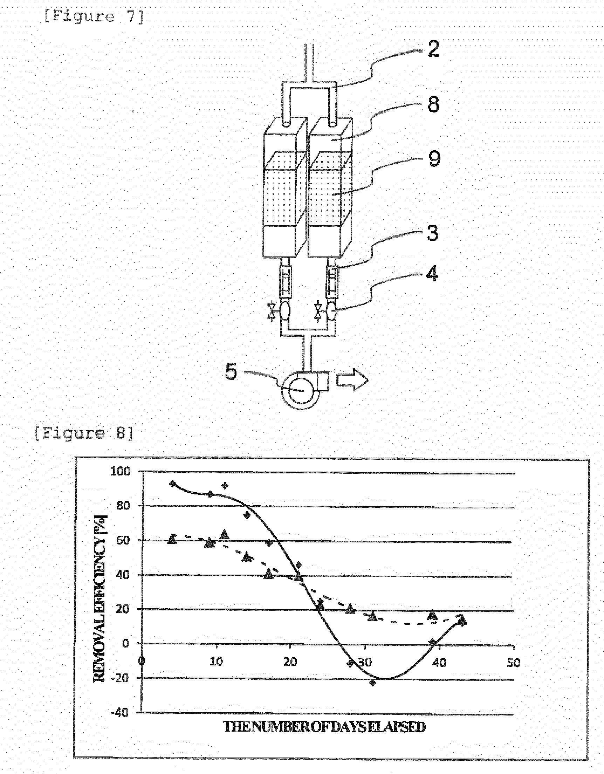

The gas removal efficiency of the filter structures was measured using a gas permeability tester as shown in Figure 7.

That is, two acrylic cylindrical square test columns (19 mm × 19 mm × length 20 cm) 8 were arranged in parallel, a gas supply tube 2 was attached to the upstream side of the columns, and flow meters 3, flow rate adjusting valves 4, and a pump 5 were attached in this order to the downstream side of the columns. Filter structures (length 80 mm) 9 were put in the columns. Air was flowed with the flow rate being adjusted so that the filtration wind speed of the filter structures was 0.5 m/s. As the air flowed through the columns, 7 ppb of TMS and 250 ppb of VOC mixed with air adjusted to a temperature of 23°C and a humidity of 50% using a constant temperature and humidity chamber was used.

As the filter structures, the filter structure A and the filter structure B produced above were used. The above-described two filter structures were used respectively in the two columns 1 arranged in parallel.

The air on the upstream side and the downstream side of the columns was collected using adsorption tubes, and the adsorption tubes that collected the air were subjected to gas analysis using an ATD (thermal desorber)-GC/MS to measure the gas concentration of TMS. The removal efficiency of TMS was calculated by the following formula from the gas concentration of TMS on the upstream side and the downstream side of the measured columns to plot a graph of the temporal change.

$$\text{Removal efficiency (\%)} = \{(\text{Gas concentration on upstream side} - \text{Gas concentration on downstream side})/\text{Gas concentration on upstream side}\} \times 100$$

The results are shown in Figure 8. In the figure, triangles (△) represent data of the filter structure A, and diamonds (◊) represent data of the filter structure B. The horizontal axis of the graph represents the number of days elapsed (days), and the vertical axis thereof represents the removal efficiency (%).

As shown in Figure 8, the filter structure A using the zeolite A showed exceptionally low reduction rate in removal efficiency of TMS due to the lapse of days as compared with the filter structure B using activated carbon. In the case of activated carbon, the removal efficiency turned into a minus after the lapse of some days. That is, the TMS adsorbed once was desorbed and released. In contrast, in the case of the filter structure A, the removal efficiency did not turn into a minus even after lapse of 40 days.

Example 5

A clay-like sample was produced by mixing 60 parts by weight of the zeolite A as an inorganic silica-based porous material, 25 parts by weight of kaolin stone that is clay as a binder, and 15 parts by weight of colloidal silica, and adding pure water thereto. The clay-like sample was allowed to pass through a mesh to be formed into threads and was ground in a mortar that had been sufficiently dried in an oven, and particles with a particle diameter of 200 to 500 μm were collected therefrom by sieving to obtain a pelletized adsorbent (pellets). It should be noted that, three types of pellets (pellets A to C) were produced respectively using three colloidal silicas, as the above-described colloidal silica, having different pHs.

The gas removal efficiency of the adsorbent was measured using the gas permeability tester as shown in Figure 1 in the same manner as in Example 2, except that the pellets A to C shown in Table 4 which were obtained above were used as the test samples.

Air on the upstream side and the downstream side of the columns was collected using adsorption tubes, and the adsorption tubes that collected the air were subjected to gas analysis using an ATD (thermal desorber)-GC/MS to measure the gas concentration of TMS. The removal efficiency of TMS was calculated by the following formula from the gas concentration of TMS on the upstream side and the downstream side of the measured columns to plot a graph of the temporal change of the test samples. Removal efficiency (%) = {(Gas concentration on upstream side - Gas concentration on downstream side)/Gas concentration on upstream side} × 100

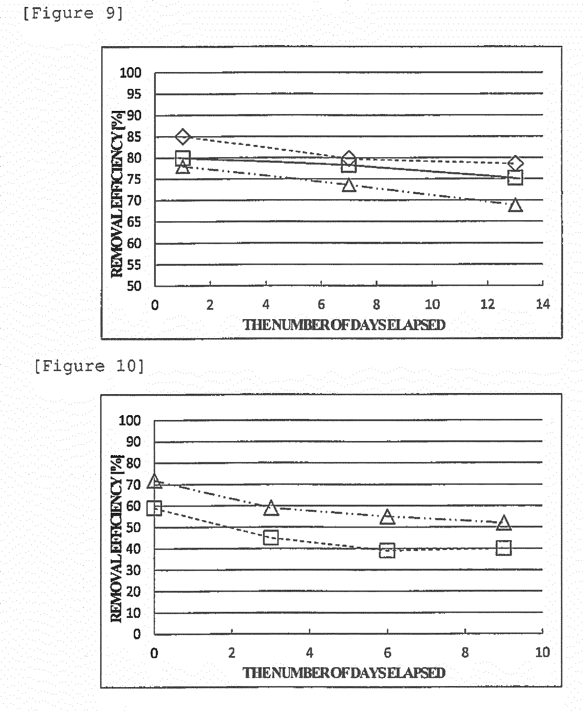

The results are shown in Figure 9. In Figure 9, diamonds (◊) represent data of the pellets A, squares (□) represent data of the pellets B, and triangles (Δ) represent data of the pellets C, respectively. Further, in Figure 9, the horizontal axis of the graph represents the number of days elapsed (days), and the vertical axis thereof represents the removal efficiency (%).

[Table 4]

(Table 4)

| Test sample | Removal efficiency (%) | | | pH of water mixture of pellets[*1] | pH of water mixture of binder[*2] | pH of water mixture of colloidal silica |
|---|---|---|---|---|---|---|
| | After lapse of 1 day | After lapse of 7 days | After lapse of 13 days | | | |
| Pellets A | 85 | 80 | 79 | 3.22 | 3.88 | 2.8 |
| Pellets B | 80 | 78 | 75 | 3.47 | 5.29 | 7.3 |
| Pellets C | 78 | 74 | 69 | 5.12 | 9.55 | 10.2 |
| *1: Pellets obtained by mixing and granulating zeolite A, clay, and colloidal silica, which correspond to mixture containing absorbent separated from chemical filter. <br> *2: Mixture of clay and colloidal silica | | | | | | |

As shown in Figure 9, the adsorbent obtained by pelletizing the zeolite (zeolite A) such that a pH of the water mixture was 7 or less showed significant removal efficiency of TMS even after a lapse of days regardless of the pH value of the water mixture of the binder. Further, above all, the pellets produced using a binder such that a pH of the water mixture was low tended to show high removal efficiency of TMS.

Example 6

The gas removal efficiency of the adsorbent was measured using the gas permeability tester as shown in Figure 1 in the same manner as in Example 2, except that a mixtures (mixed zeolites) obtained by mixing the zeolite A that is synthetic zeolite with natural zeolite were used as the test samples. It should be noted that a mixed zeolite A (mixed ratio: 10 weight% of the zeolite A and 90 weight% of the natural zeolite) and a mixed zeolite B (mixed ratio: 15 weight% of the zeolite A and 85 weight% of the natural zeolite) were used as the mixed zeolites serving as the test samples.

Air on the upstream side and the downstream side of the columns was collected using adsorption tubes, and the adsorption tubes that collected the air were subjected to gas analysis using an ATD (thermal desorber)-GC/MS to measure the gas concentration of TMS. The removal efficiency of TMS was calculated by the following formula from the gas concentration of TMS on the upstream side and the downstream side of the measured columns to plot a graph of the temporal change of the test samples.

$$\text{Removal efficiency (\%)} = \{(\text{Gas concentration on upstream side} - \text{Gas concentration on downstream side})/\text{Gas concentration on upstream side}\} \times 100$$

The results are shown in Table 5 and Figure 10. In Figure 10, triangles (△) represent data of the mixed zeolite A, and squares (□) represent data of the mixed zeolite B, respectively. Further, in Figure 10, the horizontal axis of the graph represents the number of days elapsed (days), and the vertical axis thereof represents the removal efficiency (%).

[Table 5]

(Table 5)

| Test sample | Removal efficiency (%) | | | |
|---|---|---|---|---|
| | At start of measurement | After lapse of 3 days | After lapse of 6 days | After lapse of 9 days |
| Mixed zeolite A | 59 | 45 | 39 | 40 |
| Mixed zeolite B | 72 | 59 | 55 | 52 |

As shown in Figure 10, the higher the content of synthetic zeolite in the adsorbent, the higher the removal efficiency of TMS tended to be.

Reference Signs List

1:    Column
2:    Tube
3:    Flow meter
4:    Flow rate adjusting valve
5:    Pump
6:    Non-woven fabric
7:    Test sample (Adsorbent)
8:    Column
9:    Filter structure

Industrial Applicability

According to the chemical filter of the present invention, a removal effect, particularly, of a silanol compound such as TMS lasts for a long time as compared with activated carbon since TMS or the like that has been adsorbed once is not desorbed again. That is, the removal efficiency gently decreases without decreasing in a short time, and does not turn into a minus effect (phenomenon in which the concentration is higher on the downstream side of the filter than on the upstream side thereof) by releasing TMS as in activated carbon. Therefore, the chemical filter of the present invention can be used particularly preferably for applications in which the silanol compound is desired to be removed such as a chemical filter of a clean room (particularly as an internal chemical filter of an exposure apparatus and an internal chemical filter of a coating and developing apparatus), a chemical filter of a wastewater treatment plant, and a chemical filter of a landfill site. Moreover, according to the chemical filter of the present invention, since the silanol compound in air can be removed exceptionally efficiently, the amount of the adsorbent to be used can be reduced to a very small amount, and the number of filter substrates also can be reduced, resulting in energy saving, low cost, and space saving.

**Claims**

1. A chemical filter for silanol compound removal, using, as an adsorbent, an inorganic silica-based porous material such that a pH of a water mixture (content: 5 wt%) obtained by mixing with pure water is 7 or less.

2. The chemical filter for silanol compound removal according to claim 1, wherein the inorganic silica-based porous material is at least one or two or more inorganic silica-based porous materials selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

3. The chemical filter for silanol compound removal according to claim 1 or 2, using, as the adsorbent, another adsorbent together with the inorganic silica-based porous material such that a pH of the water mixture (content: 5 wt%) is 7 or less.

4. The chemical filter for silanol compound removal according to any one of claims 1 to 3, comprising synthetic zeolite as the inorganic silica-based porous material, wherein a content of the synthetic zeolite in the adsorbent is 10 weight% or more based on a total weight of the adsorbent.

5. The chemical filter for silanol compound removal according to any one of claims 1 to 4, comprising synthetic zeolite as the inorganic silica-based porous material, wherein a ratio (molar ratio) of $SiO_2$ to $Al_2O_3$ [$SiO_2/Al_2O_3$] in the synthetic zeolite is 4 to 2000.

6. The chemical filter for silanol compound removal according to any one of claims 1 to 5, comprising synthetic zeolite as the inorganic silica-based porous material, wherein the synthetic zeolite has at least one framework structure selected from the group consisting of A type, ferrierite, MCM-22, ZSM-5, ZSM-11, SAPO-11, mordenite, beta type, X type, Y type, L type, chabazite, and offretite.

7. The chemical filter for silanol compound removal according to any one of claims 1 to 6, wherein the adsorbent is attached to a filter substrate by a binder.

8. The chemical filter for silanol compound removal according to claim 7, wherein the binder is a binder such that a pH of a water mixture (content: 5 wt%) obtained by mixing with pure water is 7 or less.

9. The chemical filter for silanol compound removal according to claim 7 or 8, wherein the binder is an inorganic binder.

10. The chemical filter for silanol compound removal according to claim 9, wherein the inorganic binder is colloidal inorganic oxide particles.

11. The chemical filter for silanol compound removal according to any one of claims 1 to 10, wherein the chemical filter has a honeycomb structure, a pleated structure, or a three-dimensional network structure.

12. The chemical filter for silanol compound removal according to claim 11, wherein the honeycomb structure is a honeycombed structure or has a shape with a cross section in the form of grids, circles, waves, polygons, or irregular forms, or a shape having a curved surface entirely or partially, the structure allowing air to pass through cells serving as elements of the structure.

13. The chemical filter for silanol compound removal according to any one of claims 1 to 6, wherein the chemical filter for silanol compound removal comprises the adsorbent that is pelletized.

14. The chemical filter for silanol compound removal according to claim 13, wherein the pelletization uses a binder such that a pH of a water mixture (content: 5 wt%) obtained by mixing with pure water is 7 or less.

15. The chemical filter for silanol compound removal according to claim 13 or 14, wherein the filter containing the pelletized adsorbent has at least one structure selected from the group consisting of a pleated structure, a pellet-filled structure, and a three-dimensional network structure.

16. The chemical filter for silanol compound removal according to any one of claims 1 to 6, wherein the chemical filter for silanol compound removal is produced by a papermaking process.

17. The chemical filter for silanol compound removal according to any one of claims 1 to 6, wherein the chemical filter for silanol compound removal is of a ceramic type.

18. The chemical filter for silanol compound removal according to any one of claims 1 to 6, wherein the adsorbent is attached to a filter substrate without using a binder.

19. A chemical filter for silanol compound removal, using, as an adsorbent, an inorganic silica-based porous material, such that a pH of a water mixture (content: 5 wt%) obtained by mixing a mixture containing the adsorbent separated from the chemical filter with pure water is 7 or less.

20. The chemical filter for silanol compound removal according to claim 19, wherein the inorganic silica-based porous material is at least one inorganic silica-based porous material selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

21. A chemical filter for silanol compound removal, using, as an adsorbent, an inorganic silica-based porous material, such that a pH of an immersion fluid (content of the chemical filter: 5 wt%) obtained by immersing a strip of the chemical filter containing the adsorbent in pure water is 7 or less.

22. The chemical filter for silanol compound removal according to claim 21, wherein the inorganic silica-based porous material is at least one inorganic silica-based porous material selected from the group consisting of zeolite, silica gel, silica alumina, aluminum silicate, porous glass, diatomite, hydrous magnesium silicate clay mineral, acid clay, activated clay, activated bentonite, mesoporous silica, aluminosilicate, and fumed silica.

23. An exposure apparatus comprising the chemical filter for silanol compound removal according to any one of claims 1 to 22.

24. A coating and developing apparatus comprising the chemical filter for silanol compound removal according to any one of claims 1 to 22.

25. A gaseous pollutant-controlled clean room comprising the chemical filter for silanol compound removal according to any one of claims 1 to 22.

[Figure 1]

[Figure 2]

EP 3 059 000 A1

[Figure 3]

[Figure 4]

23

[Figure 5]

[Figure 6]

[Figure 7]

[Figure 8]

[Figure 9]

[Figure 10]

## INTERNATIONAL SEARCH REPORT

| International application No. |
|---|
| PCT/JP2014/075994 |

| A. CLASSIFICATION OF SUBJECT MATTER |
|---|
| *B01D53/02*(2006.01)i, *B01D53/04*(2006.01)i, *B01J20/10*(2006.01)i, *B01J20/12*(2006.01)i, *B01J20/14*(2006.01)i, *B01J20/16*(2006.01)i, *B01J20/18*(2006.01)i, *B01J20/28*(2006.01)i, *B01J20/30*(2006.01)i, *C01B33/14*(2006.01)i, |
| According to International Patent Classification (IPC) or to both national classification and IPC |

| B. FIELDS SEARCHED |
|---|
| Minimum documentation searched (classification system followed by classification symbols) |
| B01D53/02, B01D53/04, B01J20/10, B01J20/12, B01J20/14, B01J20/16, B01J20/18, B01J20/28, B01J20/30, C01B33/14, C01B39/02, H01L21/027 |

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
    WPI

## C. DOCUMENTS CONSIDERED TO BE RELEVANT

| Category* | Citation of document, with indication, where appropriate, of the relevant passages | Relevant to claim No. |
|---|---|---|
| X<br>A | WO 2011/099616 A1 (Nitta Corp.),<br>18 August 2011 (18.08.2011),<br>claims; examples<br>& TW 201132403 A | 19–25<br>1–18 |
| A | JP 2012-055807 A (Kureha Corp.),<br>22 March 2012 (22.03.2012),<br>claims; examples<br>(Family: none) | 1–25 |
| A | JP 2012-030163 A (Nitta Corp.),<br>16 February 2012 (16.02.2012),<br>claims; examples<br>(Family: none) | 1–25 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 November, 2014 (27.11.14) | 09 December, 2014 (09.12.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/075994 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2011-166085 A  (Nitta Corp.),<br>25 August 2011 (25.08.2011),<br>claims; examples<br>(Family: none) | 19-25 |
| A | JP 2009-165998 A  (Takasago Thermal Engineering Co., Ltd.),<br>30 July 2009 (30.07.2009),<br>claims; examples<br>(Family: none) | 1-25 |
| A | JP 2007-538192 A  (GM Global Technology Operations, Inc.),<br>27 December 2007 (27.12.2007),<br>claims; examples<br>& US 2007/0217978 A1     & EP 1751409 A<br>& WO 2005/113953 A1     & DE 102004024519 A<br>& CN 1965152 A          & KR 10-2007-0052703 A | 1-25 |

Form PCT/ISA/210 (continuation of second sheet) (July 2009)

**INTERNATIONAL SEARCH REPORT**

International application No.

PCT/JP2014/075994

Continuation of A. CLASSIFICATION OF SUBJECT MATTER
  (International Patent Classification (IPC))

*C01B39/02*(2006.01)i, *H01L21/027*(2006.01)i

        (According to International Patent Classification (IPC) or to both national
        classification and IPC)

Form PCT/ISA/210 (extra sheet) (July 2009)

**EP 3 059 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008181968 A

- WO 2011099616 A